# EUROPEAN PATENT APPLICATION

(11) **EP 2 677 781 A1**
(43) Date of publication of application: **25.12.2013**
(21) Application number: 11878152.5
(22) Date of filing: 19.12.2011
(51) Int. Cl.: H04W 4/12

(54) **METHOD DEVICE AND SYSTEM FOR SERVICE RESPONSE**

(71) Applicant: Huawei Technologies Co., Ltd., Shenzhen, Guangdong 518129 (CN)
(72) Inventor: ZHOU, Han, Shenzhen Guangdong 518129 (CN); MADEMANN, Frank, Shenzhen Guangdong 518129 (CN)
(74) Representative: Isarpatent
(86) International application number: PCT/CN2011/084199
(87) International publication number: WO 2013/091156

(57) **Abstract**

The present invention discloses a service response method, device, and system, and relates to the field of mobile communications, which provides conditions for implementing optimized transmission of small-packet data and reducing the waste of network signaling resources. The service response method includes: receiving, by a user equipment, downlink data or a downlink message, where the downlink data or message is small-packet data; selecting a signaling mode or data mode as a mode of responding to the downlink data or message; and responding to the downlink data or message by using the selected mode. The technical solutions provided in the present invention are applicable to a scenario where a UE responds to a service.

## Description

### TECHNICAL FIELD

The present invention relates to the field of mobile communications, and in particular, to a service response method, device and system.

### BACKGROUND

The core network of a wireless evolution network mainly includes three logical function entities, namely, an MME (Mobility Management Entity, mobility management entity), an S-GW (Serving Gateway, serving gateway), and a P-GW (Packet Data Network Gateway, packet data network gateway). The MME is responsible for NAS (Network Attached Storage, network attached storage) signaling, NAS signaling encryption, roaming and tracking functions, allocation of user temporary identities, and security function. The MME corresponds to a control plane part of an SGSN (Serving GPRS Support Node, serving GPRS support node) inside a UMTS (Universal Mobile Telecommunications System, universal mobile telecommunications system). The S-GW is responsible for local mobility anchor points, mobility anchor points in the 3Gpp (The 3rd Generation Partnership Project, the 3rd Generation Partnership Project) system, and lawful interception of related information. The P-GW is responsible for related functions such as policy execution, charging, and lawful interception.

An M2M (Machine to Machine, machine to machine) application refers to network communication inside one network element or between multiple network elements without human participation, such as transportation control and management and factory monitoring applications. An M2M terminal may be connected to an application server for data communication over a wireless evolution network. In an M2M application, a network may trigger a terminal to initiate a service. That is, the network (for example, an application server, or a platform device, or another management device) sends a trigger message to the terminal, and after receiving the trigger message sent by the network, the terminal initiates a connection establishment procedure and interacts with the network by using an established connection.

In the prior art, the network triggers a terminal to initiate a service by using a short message as a bearer to send the trigger message to the terminal. After receiving the short message and obtaining the trigger message by parsing the short message, the terminal initiates a PDP (Packet Data Protocol, packet data protocol) or PDN (Packet Data Network, packet data network) connection establishment procedure.

When implementing the procedure that the network triggers a terminal to initiate a service, the inventor finds that the prior art has at least the following problems:

In M2M applications, after the network sends the trigger message to the terminal, the terminal only needs to return an acknowledgement message in most cases. The trigger message and acknowledgement message are both information of small data traffic (small-packet data for short). In the prior art, however, after receiving the trigger message from the network, the terminal always initiates PDP or PDN connection establishment and sends an acknowledgement instruction to the network over the established PDP or PDN. If what is fed back by the terminal is only the small-packet data, the method of always establishing a PDP or PDN connection between the terminal and the network (the complete PDP or PDN connection establishment procedure is performed) costs the network a lot to transmit the small-packet data for the terminal, causing a huge waste of network signaling resources.

### SUMMARY

Embodiments of the present invention provide a service response method, device and system, which facilitate implementation of optimized transmission of small-packet data and reduce the waste of network signaling resources.

In order to achieve the foregoing objectives, embodiments of the present invention adopt the following technical solutions.

In one aspect, the present invention provides a service response method, including:
receiving, by a user equipment UE, downlink data or a downlink message, where the downlink data or message is small-packet data;
selecting a signaling mode or data mode as a mode of responding to the downlink data or message; and
responding to the downlink data or message by using the selected mode.

In another aspect, the present further provides a service response method, including:
sending, by a network node device, downlink data or downlink message to a UE, where the downlink data or message is small-packet data;
if the UE is in idle state, paging the UE;
receiving a second service request message sent by the UE;
establishing a NAS connection of the UE, where during the procedure of establishing the NAS connection for the UE, the network node device determines not to create a radio access context and/or a security context for the UE; and
receiving response data or a response message which is sent in signaling mode or data mode by the UE.

In one aspect, the present invention provides a user equipment, including:
a receiving unit, configured to receive downlink data or a downlink message, where the downlink data or message is small-packet data;
a selecting unit, configured to select a signaling mode or data mode as a mode of responding to the downlink data or message; and
a responding unit, configured to respond to the downlink data or message by using the selected mode.

In another aspect, the present invention further provides a network node device, including:
a sending unit, configured to send downlink data or a downlink message to a UE, where the downlink data or message is small-packet data;
a second connecting unit, configured to: page the UE when the UE is in idle state; receive a second service request message sent by the UE; and establish a NAS connection of the UE, where during the procedure of establishing the NAS connection for the UE, the network node device determines not to create a radio access context and/or a security context for the UE; and
a response receiving unit, configured to receive response data or a response message which is sent in signaling mode or data mode by the UE.

It should be noted that the above network node device may be an SGSN (Serving GPRS Support Node, serving GPRS support node) or an MME.

In still another aspect, the present invention further provides a service response system, including a user equipment UE and a network node device.

The network node device is configured to send downlink data or a downlink message to the UE, where the downlink data or message is small-packet data.

The user equipment is configured to receive the downlink data or message sent by the network node device, select a signaling mode or data mode as a mode of responding to the downlink data or message, and respond to the downlink data or message by using the selected mode.

The network node device is further configured to receive response data or a response message which is sent in selected mode by the UE.

According to the service response method, device and system provided in the present invention, the network node device sends downlink data or a downlink message to the UE, and after the UE receives the downlink data or message, selects a mode of responding to the downlink data or message, and responds to the downlink data or message by using the selected mode. Compared with the prior art, during a service response procedure in the present invention, the mode of responding to the downlink data or message can be selected, which facilitates implementation of optimized transmission of small-packet data and reduces the waste of network signaling resources.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following descriptions show merely some embodiments of the present invention, and persons of ordinary skill in the art may still derive other drawings from the accompanying drawings without creative efforts.

FIG. 1 is a flowchart of a service response method according to an embodiment of the present invention;

FIG. 2 is a flowchart of another service response method according to an embodiment of the present invention;

FIG. 3 is a schematic structural diagram of a user equipment according to an embodiment of the present invention;

FIG. 4 is a schematic structural diagram of another user equipment according to an embodiment of the present invention;

FIG. 5 is a schematic structural diagram of a network node device according to an embodiment of the present invention; and

FIG. 6 is a schematic structural diagram of another network node device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

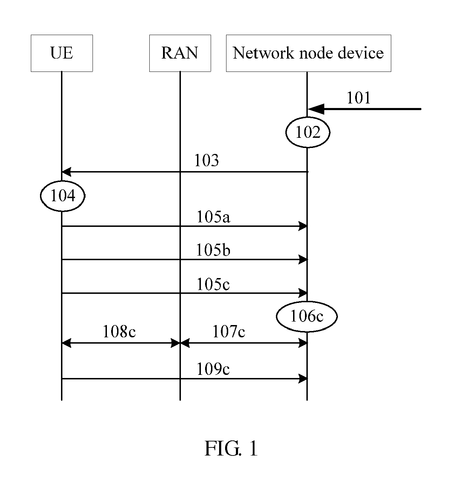

An embodiment of the present invention provides a service response method when a UE is in connected state. As shown in FIG. 1, the method includes:

Step 101: A network node device receives downlink data or downlink message delivered by a network side device, where the downlink data or message is small-packet data.

A network node device in all embodiments of the present invention may specifically be an SGSN or an MME; the data may include an IP data packet or application layer data; the message may include an instruction message delivered from a network side, for example, a terminal configuration and management message, or a terminal trigger message, or other instruction messages. A network side device is specifically a sender of downlink data or a down link message, for example, an external server.

Step 102: The network node device queries the state of a UE.

A UE may be in two states: connected state (also referred to as ready state) and idle state (also referred to as waiting state).

When the UE is in connected state, the following steps are directly performed; when the UE is in idle state, the following steps are performed after the UE is instructed to change from an idle state to a connected state. It should be noted that while the UE is changing from the idle state to the connected state, the network node device determines not to create a radio access context and/or a security context for the UE. The radio access context is specifically a RAB (Radio Access Bearer, radio access bearer) context or an ERAB (E-UTRAN Radio Access Bearer, evolved universal terrestrial radio access network radio access bearer) context.

Step 103: The network node device sends the downlink data or message to the UE, and the UE receives the downlink data or message.

The step may be specifically: When the UE is in connected state, the network node device directly sends a NAS (Non-Access Stratum, non-access stratum) signaling message or short message to the UE over a NAS connection (that is, an Iu/S1 connection), where the NAS signaling message or short message includes the data or message (that is, downlink data or a downlink message) delivered by the network side.

For example, the data may include an IP data packet or application layer data. The step is specifically as follows: The IP data packet or application layer data is encapsulated in the NAS signaling message or short message (SMS) and is sent by the network node device to the UE.

For example, the message may include the instruction message delivered from the network side, such as a terminal configuration and management message, or a terminal trigger message, or other instruction messages. The step is specifically as follows: The message is encapsulated in the NAS signaling message or short message (SMS) and is sent by the network node device to the UE.

Optionally, the NAS message or short message further carries a response mode indication element instructing the UE to respond to the downlink data or message by using a signaling mode or data mode. The indication element may be carried in the NAS signaling or short message in the following two manners:

A1). The network node device obtains subscription data of the UE in the access procedure of the UE, where the service characteristic of the UE included in the subscription data is small-packet data; and the network node device sets the above response mode indication element according to the service characteristic. After receiving the downlink NAS signaling or short message, the network node device adds the response mode indication element to the downlink NAS signaling or short message, so as to carry it to the UE.

A2). The sender of the downlink data or message adds the above response mode indication element to the downlink data or message. For the network node device, this response mode indication element is transparent, that is, the network node device does not sense the above the response mode indication element in this case.

Step 104: The UE selects a signaling mode or data mode as a mode of responding to the downlink data or message.

For this step, reference may be made to the following three manners. If the NAS signaling message or short message received by the UE carries the response mode indication element in addition to the downlink data or message, reference may be made to mode B1); if the NAS signaling message or short message received by the UE does not carry the response mode indication element, reference may be made to mode B2) or B3).

B1). According to the response mode indication element carried in the NAS signaling or short message including the downlink data or message, the signaling mode or data mode is selected as the mode of responding to the downlink data or message, where the response mode indication element is used to instruct the UE to respond to the downlink data or message by using the signaling mode or data mode.

B2). The UE generates response data or a response message and selects the signaling mode or data mode as the mode of responding to the downlink data or message according to the data amount of the response data or message.

For example, this manner may specifically be: If the data amount of the above response data or message is smaller than or equal to a preset threshold, the UE selects to use the signaling mode to respond to the downlink data or message; if data amount of the above response data or message is greater than the preset threshold, the UE selects to use the data mode to respond to the downlink data or message. The above threshold may be saved in the UE. For example, an OMA DM (Open Mobile Alliance Device Management, open mobile alliance device management) server sends the above threshold to the UE, and the UE saves it; or the network node device (an SGSN or MME) sends the above threshold to the UE by using a NAS message or short message. For example, the above threshold is configured on the network node device, and the network node device obtains the above threshold according to configuration information, and then carries the threshold in the NAS message or short message and sends it to the UE, and the UE saves it.

B3). The UE generates response data or a response message, obtains the number of response times of the response data or message, and according to the number of response times of the response data or message, selects the signaling mode or data mode as the mode of responding to the downlink data or message.

For example, this manner may specifically be: If the number of response times of the above response data or message (that is, the number of times of sending) is 1, the UE selects to use the signaling mode to respond to the downlink data or message; if the number of response times of the above response data or message (that is, the number of times of sending) is more than 1, the UE selects to use the data mode to respond to the downlink data or message.

Then, responding to the downlink data or message by using the selected mode is specifically: if the selected mode is the signaling mode, reference may be made to step 105a; if the selected mode is the data mode and the UE has no PDP context or PDN connection or there is no PDP context or PDN connection that can meet a response data transmission requirement, reference may be made to steps 105b, 105c, 106c, 107c, 108c, and 109c; if the selected mode is the data mode and the UE has a PDP context or PDN connection, reference may be made to steps 105c, 106c, 107c, 108c, and 109c. The case where the UE has a PDP context or PDN connection includes a case where the UE has a PDP context or PDN connection that can meet a response data transmission requirement.

Step 105a: The UE adds the generated response data or message to an uplink NAS message or short message and sends the uplink NAS message or short message to the network node device; the network node device receives the response data or message which is sent in signaling mode by the UE.

Step 105b: When the UE has no PDP context or PDN connection or there is no PDP context or PDN connection that can meet a response data transmission requirement, the UE initiates a PDP context activation or PDN connection establishment procedure. Specifically, the UE sends an activate PDP context request (Activate PDP context request) message to an SGSN or sends a PDN connection request (PDN connection request) message to an MME. After a PDP context is activated or a PDN connection is established, the UE has a PDP context or PDN connection.

Step 105c: When the UE has a PDP context or PDN connection, the UE initiates, to the network node device, a service request procedure for recovering a bearer. Specifically, the UE sends a first service request message to the network node device, where the first service request message is used to create a radio access context and/or a security context for the UE, for example, Service Type (service type) in the first service request message is set to Data (data).

The radio access context is specifically a RAB (Radio Access Bearer, radio access bearer) context or an ERAB (E-UTRAN Radio Access Bearer, evolved universal terrestrial radio access network radio access bearer) context.

Step 106c: After receiving the first service request message, the network node device determines to create a radio access context and/or a security context for the UE in a service request procedure. In this step, even if the UE is already in connected state, the network node device proceeds according to a normal service request procedure (that is, creating a radio access context and/or a security context for the UE) after receiving the first service request message.

Step 107c-108c: The network node device initiates a radio access assignment (establishment) procedure. Through this step, the SGSN or MME creates a radio access context and/or a security context for the UE. In this case, the radio access for the UE is established.

Step 109c: After the radio access for the UE is established, the UE may send the response data or message in data mode to the network node device over a PDP or PDN connection, and the network node device receives the response data or message sent in data mode by the UE.

According to the service response method provided in the present invention, for a UE in connected state, the network node device sends downlink data or a downlink message to the UE and after the UE receives the downlink data or message, selects a mode of responding to the downlink data or message, and responds to the downlink data or message by using the selected mode. Compared with the prior art, during a service response procedure in the present invention, the mode of responding to the downlink data or message can be selected, which facilitates implementation of optimized transmission of small-packet data and reduces the waste of network signaling resources.

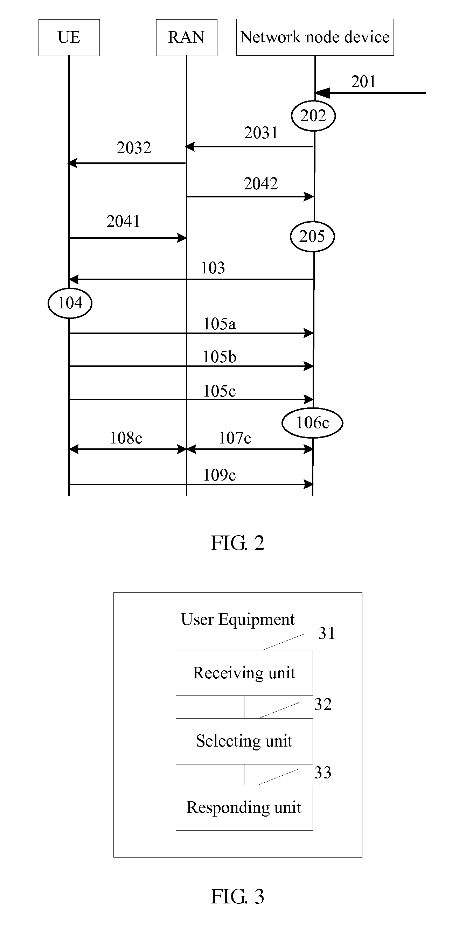

An embodiment of the present invention provides a service response method when a UE is in idle state. As shown in FIG. 2, the method includes:

Step 201: A network node device receives downlink data or a downlink message delivered by a network side, where the downlink data or message is small-packet data.

For details, reference may be made to step 101 in the above embodiment.

Step 202: The network node device queries the state of a UE.

When the UE is in idle state, the UE receives a paging message sent by the network node device, and sends a second service request message to the network node device to establish a NAS connection for the UE, so that the UE can change from an idle state to a connected state. During the procedure of establishing a NAS connection for the UE, the network node device determines not to create a radio access context and/or a security context for the UE. Steps 2031-2032, 2041, 2042, and 205 are specifically included.

Steps 2031-2032: When the UE is in idle state, the network node device pages the UE, that is, the network node device initiates a paging message.

Optionally, C1) The network node device adds an indication element indicating that the downlink data or message is small-packet data to the paging message and sends the paging message to the UE. For example, the indication element is a small data flag bit, and the small data flag bit is added by the network node device to the paging message, to be carried to the UE.

Specifically, the setting of the small data flag bit is used as an example to describe the method of setting an indication element. The method may be: C11) In an attach or routing area/tracing area update procedure, the network node device obtains, from subscription data, the service characteristic of the UE being small-packet data, sets the small data flag bit according to the service characteristic, and adds the flag bit to the paging message. Another method may be: C12) The sender of the downlink data or message generates the small data flag bit and sends the small data flag bit to the network node device, and the network node device adds the small data flag bit to the paging message.

Optionally, C2): The network node device sends a paging message to the UE, where the paging message does not carry an indication element.

Subsequently, the UE responds to the paging message from the network node device, and sends a second service request message to the network node device. Steps 2041 and 2042 are specifically included.

Step 2041: The UE sends an RRC connection request message to a RAN-side device, where the message includes the second service request message.

This step involves two cases:

Case 1: If the paging message received by the UE in steps 2031-2032 carries the small data flag bit, the UE sets a cause value, for example, it sets an RRC cause (RRC cause value) to MO signaling or another cause value, so that the RRC cause is used to instruct the UE to initiate an RRC connection establishment procedure (including a service request procedure) to respond to paging of downlink small-packet data; the UE sends an RRC connection request message carrying the small data flag bit to the RAN-side device.

Case 2: If the paging message received by the UE in steps 2031-2032 does not carry the small data flag bit, the UE initiates a normal service request procedure to respond to the paging message, and sends a normal RRC connection request message without carrying a cause value to the RAN-side device.

Step 2042: After receiving the RRC connection request message from the UE, the RAN (Radio Access Network, radio access network) side device sends an initial UE message (initial UE message) to the network node device.

This step may also involve two cases:

Case 1: If the RRC connection request message sent by the UE to the RAN-side device carries a cause value, for example, the small data flag bit, the RAN-side device carries the small data flag bit in the initial UE message and sends it to the network node device, that is, the initial UE message carries the small data flag bit and the second service request message. In this case, the UE may also carry MO signaling or the another cause value in the second service request, for instructing the UE to initiate a service request procedure to respond to the paging of the downlink small-packet data.

Case 2: If the RRC connection request message sent by the UE to the RAN-side device does not carry a cause value, the UE responds to the paging message according to a normal service request procedure, that is, an initial UE message carrying the second service request message is sent to the network node device.

The network node device receives the initial UE message sent by the RAN-side device, which means that the network node device can receive the second service request message included in the initial UE message.

Step 205: The network node device establishes a NAS connection for the UE, and determines not to create a radio access context and/or a security context for the UE during the procedure of establishing the NAS connection for the UE.

How the network node device determines not to create a radio access context and/or a security context for the UE may also involve two cases:

Case 1: If the initial UE message received by the network node device carries the cause value, the network node device determines not to create a radio access context and/or a security context for the UE according to the cause value.

Case 2: If the initial UE message received by the network node device does not carry the cause value, after the network node device receives a normal second service request message, where the second service request message carries a service type indication and the service type indication is used to indicate that the second service request message is a paging response. The network node device can learn, according to the service type indication being the paging response, that the second service request message is a message in response to paging of downlink small-packet data, and the network node device determines not create a radio access context and/or a security context for the UE.

After a NAS (Iu/S1) connection is established between the UE and the network node device, that is, the UE changes from an idle state to a connected state, the service response of the UE in idle state is finally completed by referring to steps 103-109c in the above embodiment.

The service response method provided in the present invention is specific to a UE in idle state, specifically provides a solution for the UE to change from an idle state to a connected state, and finally completes the service response of the UE in idle state. Compared with the prior art, during a service response procedure in the present invention, the mode of responding to the downlink data or message can be selected, which facilitates implementation of optimized transmission of small-packet data and reduces the waste of network signaling resources.

As shown in FIG. 3, an embodiment of the present invention provides a user equipment UE, including:
a receiving unit 31, configured to receive downlink data or a downlink message, where the downlink data or message is small-packet data;
a selecting unit 32, configured to select a signaling mode or data mode as a mode of responding to the downlink data or message; and
a responding unit 33, configured to respond to the downlink data or message by using the selected mode.

Preferably, the selecting unit 32 is specifically configured to:
according to a response mode indication element carried in NAS signaling or a short message including the downlink data or message, select the signaling mode or data mode as the mode of responding to the downlink data or message, where the response mode indication element is used to instruct the UE to respond to the downlink data or message by using the signaling mode or data mode; or
select the signaling mode or data mode as the mode of responding to the downlink data or message, according to data amount of the response data or message generated by the UE; or
select the signaling mode or data mode as the mode of responding to the downlink data or message, according to the number of response times of the response data or message generated by the UE.

Optionally, if the mode selected by the selecting unit 32 is the signaling mode, the responding unit 33 is specifically configured to add the generated response data or message to an uplink NAS message or short message and sends the uplink NAS message or short message to a network node device.

Optionally, if the mode selected by the selecting unit 32 is the data mode, the responding unit 33 is specifically configured to initiate a PDP context activation or PDN connection establishment procedure when the UE has no packet data protocol PDP context or public data network PDN connection.

Optionally, if the mode selected by the selecting unit 32 is the data mode, the responding unit 33 is specifically configured to initiate a PDP context activation or PDN connection establishment procedure when the UE has no PDP context or connection that can meet a response data transmission requirement.

Optionally, if the mode selected by the selecting unit 32 is the data mode, the responding unit 33 is specifically configured to, when the UE has a PDP context or PDN connection, initiate a service request procedure to the network node device, and send the response data or message to the network node device over the PDP connection or PDN connection after the network node device creates a radio access context and/or a security context for the UE in the service request procedure.

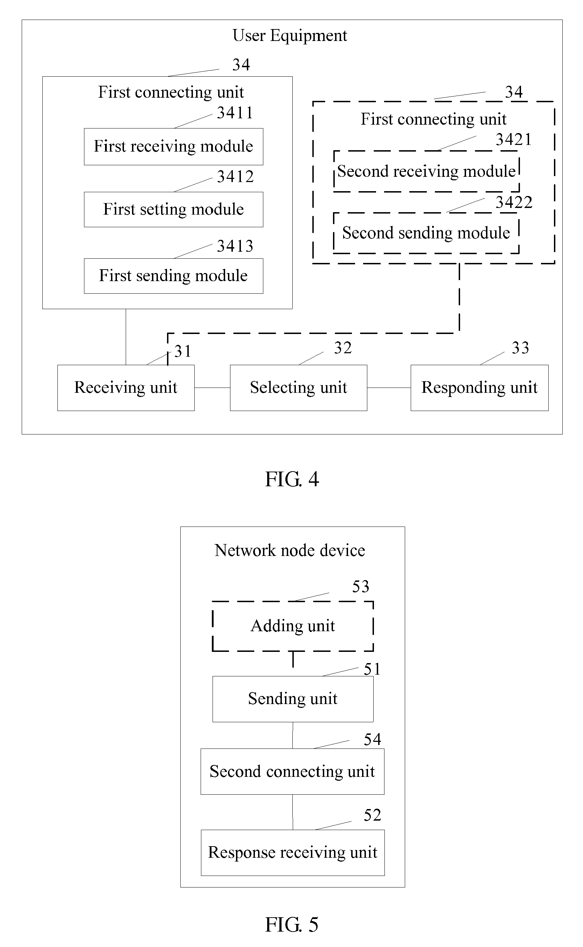

Further, as shown in FIG. 4, the UE further includes: a first connecting unit 34, configured to, when the UE is in idle state, receive a paging message sent by the network node device and send a second service request message to the network node device to establish a NAS connection for the UE.

Specifically, the first connecting unit 34 includes:
a first receiving module 3411, configured to, when the UE is in idle state, receive the paging message sent by the network node device, where the paging message carries an indication element and the indication element is used to indicate that the downlink data or message is small-packet data;
a first setting module 3412, configured to set a cause value according to the paging message carrying the indication element, where the cause value is used to instruct the UE to initiate an RRC connection establishment procedure to respond to paging of the small-packet data; and
a first sending module 3413, configured to send the cause value and the second service request message to the network node device through a RAN-side device in the RRC connection establishment procedure, to establish a NAS connection for the UE.

Or, optionally, the first connecting unit 34 includes:
a second receiving module 3421, configured to, when the UE is in idle state, receive the paging message sent by the network node device, where the paging message carries no indication element; and
a second sending module 3422, configured to send the second service request message to the network node device, to establish a NAS connection for the UE, where the second service request message carries a service type indication and the service type indication is used to indicate that the second service request message is a paging response.

An embodiment of the present invention in FIG. 5 further provides a network node device, which may be an SGSN or an MME. Specifically, the network node device includes:
a sending unit 51, configured to send downlink data or a downlink message to a UE, where the downlink data or message is small-packet data;
a second connecting unit 54, configured to page the UE when the UE is in idle state, receive a second service request message sent by the UE, and establish a NAS connection for the UE, where during the procedure of establishing the NAS connection for the UE, the network node device determines not to create a radio access context and/or a security context for the UE; and
a response receiving unit 52, configured to receive response data or a response message sent in signaling mode or data mode by the UE.

Preferably, the sending unit 51 is specifically configured to send a NAS message or short message including the downlink data or message to the UE, where the NAS message or short message further carries a response mode indication element used for instructing the UE to respond to the downlink data or message by using a signaling mode or data mode.

Optionally, the downlink data or message carries the response mode indication element added by the sender of the downlink data or message.

Or, optionally, the network node device further includes: an adding unit 53, configured to obtain, from subscription data of the UE, the service characteristic of the UE being small-packet data, set the response mode indication element according to the service characteristic, and add the indication element to the NAS message or short message.

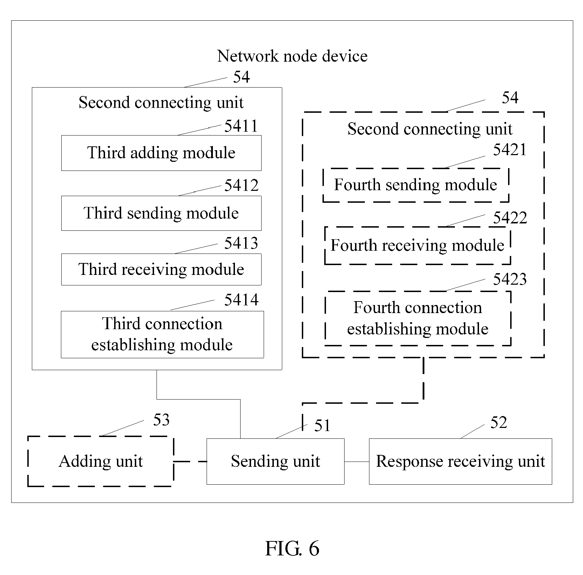

Further, as shown in FIG. 6, when the UE is in idle state, the network node device changes the UE from an idle state to a connected state through the second connecting unit 54.

Optionally, the second connecting unit 54 includes:
a third adding module 5411, configured to add an indication element to a paging message, where the indication element is used to indicate that the downlink data or message is small-packet data;
a third sending module 5412, configured to send the paging message to the UE so that the UE sets a cause value, where the cause value is used to instruct the UE to initiate an RRC connection establishment procedure to respond to paging of the small-packet data;
a third receiving module 5413, configured to receive the cause value and the second service request message forwarded by a RAN-side device; and
a third connection establishing module 5414, configured to establish a NAS connection for the UE, and according to the cause value in the third receiving module, determine not to create a radio access context and/or a security context for the UE.

The third adding module 5411 is specifically configured to: obtain, from subscription data of the UE, the service characteristic of the UE being small-packet data, set the indication element according to the service characteristic, and add the indication element to the paging message; or, receive the indication element generated and sent by the sender of the downlink data or message, and add the indication element to the paging message.

Or, optionally, the second connecting unit 54 includes:
a fourth sending module 5421, configured to send a paging message to the UE, where the paging message carries no indication element;
a fourth receiving module 5422, configured to receive the second service request message sent by the UE, where the second service request message carries a service type indication; and
a fourth connection establishing module 5423, configured to establish a NAS connection for the UE, and when the service type indication in the second service request message in the fourth receiving module is used to indicate the second service request message is a paging response, determine not to create a radio access context and/or a security context for the UE.

The function units and modules in the above user equipment UE and the function units and modules of the network node device may serve as the entities for performing corresponding steps in the above service response method.

An embodiment of the present invention provides a service response system, including a user equipment UE and a network node device.

The network node device is configured to send downlink data or a downlink message to the UE, where the downlink data or message is small-packet data.

The user equipment is configured to receive the downlink data or message sent by the network node device, select a signaling mode or data mode as a mode of responding to the downlink data or message, and respond to the downlink data or message by using the selected mode.

The network node device is further configured to receive response data or a response message sent by the UE by using the selected mode.

Further, the network node device is further configured to: page the UE when the UE is in idle state; receive the second service request message sent by the UE; and establish a NAS connection for the UE, where during the procedure of establishing the NAS connection for the UE, the network node device determines not to create a radio access context and/or a security context for the UE.

According to the service response UE, network node device and system provided in the present invention, when the UE is in connected state, the network node device sends downlink data or a downlink message to the UE by using its sending unit, and the UE receives the downlink data or message by using its receiving unit, selects a mode of responding to the downlink data or message, and selects the mode of responding to the downlink data or message by using its selecting unit, and responds to the downlink data or message in the selected mode by its responding unit. Compared with the prior art, during a service response procedure in the present invention, the mode of responding to the downlink data or message can be selected, which facilitates implementation of optimized transmission of small-packet data and reduces the waste of network signaling resources. Additionally, the solution provided in the present invention further enables the UE to change from an idle state to a connected state by using the first connecting unit of the UE and the second connecting unit of the network node device.

Persons of ordinary skill in the art may understand that all or part of the steps of the methods in the embodiments may be implemented by a program instructing relevant hardware. The program may be saved in a computer readable storage medium. When the program is run, the steps of the methods in the embodiments are performed. The storage medium may be any medium capable of saving program codes, such as a ROM, a RAM, a magnetic disk, or an optical disk.

The foregoing description is merely about exemplary embodiments of the present invention, but is not intended to limit the protection scope of the present invention. Any variation or replacement made by persons skilled in the art within the technical scope disclosed in the present invention shall fall within the protection scope of the present invention. Therefore, the protection scope of the present invention shall be subject to the claims.

## Claims

1. A service response method, comprising:
receiving, by a user equipment UE, downlink data or a downlink message, where the downlink data or message is small-packet data;
selecting a signaling mode or data mode as a mode of responding to the downlink data or message; and
responding to the downlink data or message by using the selected mode.

2. The method according to claim 1, wherein the selecting the signaling mode or data mode as the mode of responding to the downlink data or message comprises:
according to a response mode indication element carried in non-access stratum NAS signaling or a short message comprising the downlink data or message, selecting the signaling mode or data mode as the mode of responding to the downlink data or message, wherein the response mode indication element is used to instruct the UE to respond to the downlink data or message by using the signaling mode or data mode; or
generating, by the UE, response data or a response message;
selecting the signaling mode or data mode as the mode of responding to the downlink data or message, according to data amount of the response data or message generated by the UE; or
generating, by the UE, response data or a response message to obtain the number of response times of the response data or message; and
selecting the signaling mode or data mode as the mode of responding to the downlink data or message, according to the number of response times of the response data or message.

3. The method according to claim 2, wherein the selecting the signaling mode or data mode as the mode of responding to the downlink data or message according to the data amount of the response data or message generated by the UE comprises:
if the data amount of the response data or message is smaller than or equal to a preset threshold, selecting, by the UE, the signaling mode as the mode of responding to the downlink data or message.

4. The method according to claim 3, wherein the selecting the signaling mode or data mode as the mode of responding to the downlink data or message according to the data amount of the response data or message generated by the UE comprises:
if the data amount of the response data or message is greater than the preset threshold, selecting, by the UE, the data mode as the mode of responding to the downlink data or message.

5. The method according to any one of claims 1 to 4, wherein:
if the selected mode is the signaling mode, the responding to the downlink data or message by using the selected mode comprises:
adding, by the UE, the generated response data or message to an uplink NAS message or short message and sending the uplink NAS message or short message to a network node device.

6. The method according to any one of claims 1 to 4, wherein:
if the selected mode is the data mode, the responding to the downlink data or message by using the selected mode comprises:
when the UE has no packet data protocol PDP context or public data network PDN connection, initiating, by the UE, a PDP context activation or PDN connection establishment procedure.

7. The method according to any one of claims 1 to 4, wherein:
if the selected mode is the data mode, the responding to the downlink data or message by using the selected mode comprises:
when the UE has no PDP context or connection that can meet a response data transmission requirement, initiating, by the UE, a PDP context activation or PDN connection establishment procedure.

8. The method according to any one of claims 1 to 4, wherein:
if the selected mode is the data mode, the responding to the downlink data or message by using the selected mode comprises:
when the UE has a PDP context or PDN connection, sending, by the UE, a first service request message to a network node device so that after the network node device receives the first service request message, the network node device creates a radio access context and/or a security context for the UE in a service request procedure; and sending, by the UE, the response data or message to the network node device over the PDP connection or PDN connection.

9. The method according to any one of claims 1-4, wherein before the user equipment UE receives the downlink data or message, the method further comprises: if the UE is in idle state, then after receiving, by the UE, a paging message sent by a network node device, sending, by the UE, a second service request message to the network node device to establish a NAS connection for the UE; wherein during the procedure of establishing the NAS connection for the UE, the network node device determines not to create a radio access context and/or a security context for the UE.

10. The method according to claim 9, wherein:
if the paging message sent by the network node device carries an indication element and the indication element is used to indicate that the downlink data or message is small-packet data, the UE sends the second service request message to the network node device to establish the NAS connection for the UE; wherein during the procedure of establishing the NAS connection for the UE, the determining, by the network node device, not to create the radio access context and/or the security context for the UE specifically comprises:
setting, by the UE, a cause value according to the paging message carrying the indication element, wherein the cause value is used to instruct the UE to initiate a radio resource control protocol RRC connection establishment procedure to respond to paging of the small-packet data, and sending an RRC connection request message carrying the cause value to a radio access network RAN-side device so that the RAN-side device sends the second service request message to the network node device in an RRC connection establishment procedure; and
after the RAN-side device receives the RRC connection request message, sending, by the RAN-side device, the cause value to the network node device, wherein during the procedure of establishing the NAS connection for the UE, the network node device determines not to create the radio access context and/or the security context for the UE according to the cause value.

11. The method according to claim 9, wherein:
if the paging message sent by the network node device carries no indication element, the UE sends the second service request message to the network node device to establish the NAS connection for the UE, wherein during the procedure of establishing the NAS connection for the UE, the determining, by the network node device, not to create the radio access context and/or the security context for the UE specifically comprises:
sending, by the UE, the second service request message to the network node device to establish the NAS connection for the UE, wherein the second service request message carries a service type indication and the service type indication is used to indicate that the second service request message is a paging response; during the procedure of establishing the NAS connection for the UE, the network node determines not to create the radio access context and/or the security context for the UE according to the service type indication in the second service request message.

12. A method for service response, comprising:
sending, by a network node device, downlink data or a downlink message to a UE, wherein the downlink data or message is small-packet data;
paging the UE if the UE is in idle state;
receiving a second service request message sent by the UE;
establishing a NAS connection for the UE, wherein during the procedure of establishing the NAS connection for the UE, the network node device determines not to create a radio access context and/or a security context for the UE; and
receiving response data or a response message sent in signaling mode or data mode by the UE.

13. The method according to claim 12, wherein the sending, by the network node device, the downlink data or message to the UE comprises:
sending, by the network node device, a NAS message or short message comprising the downlink data or message to the UE, wherein the NAS message or short message carries a response mode indication element used to instruct the UE to respond to the downlink data or message by using the signaling mode or data mode.

14. The method according to claim 13, further comprising:
obtaining, by the network node device from subscription data of the UE, a service characteristic of the UE being small-packet data, setting the response mode indication element according to the service characteristic, and adding the indication element to the NAS message or short message; or
adding, by a sender of the downlink data or message, the response mode indication element to the downlink data or message.

15. The method according to any one of claims 12-14, wherein, the paging the UE if the UE is in idle state, receiving the second service request message sent by the UE, and establishing the NAS connection for the UE, wherein during the procedure of establishing the NAS connection for the UE, the network node device determines not to create the radio access context and/or the security context for the UE, comprises:
when the UE is in idle state, adding, by the network node device, an indication element used for indicating that the downlink data or message is small-packet data to a paging message and sending the paging message to the UE, so that the UE sets a cause value, wherein the cause value is used to instruct the UE to initiate an RRC connection establishment procedure to respond to paging of the small-packet data, so that a RAN-side device sends the second service request message and the cause value to the network node device in an RRC connection establishment procedure;
receiving, by the network node device, the second service request message and the cause value; and
establishing, by the network node device, the NAS connection for the UE, wherein during the procedure of establishing the NAS connection for the UE, the network node device determines not to create the radio access context and/or the security context for the UE according to the cause value, and establishes the NAS connection for the UE after receiving the second service request message.

16. The method according to claim 15, wherein the adding, by the network node device, an indication element used for indicating that the downlink data or message is small-packet data to the paging message comprises:
obtaining, by the network node device from the subscription data of the UE, the service characteristic of the UE being small-packet data, setting the indication element according to the service characteristic, and adding the indication element to the paging message; or
receiving, by the network node device, the indication element generated and sent by the sender of the downlink data or message, and adding the indication element to the paging message.

17. The method according to any one of claims 12-14, wherein, the paging the UE if the UE is in idle state, receiving the second service request message sent by the UE, and establishing the NAS connection for the UE, wherein during the procedure of establishing the NAS connection for the UE, the network node device determines not to create the radio access context and/or the security context for the UE, comprises:
when the UE is in idle state, sending, by the network node device, a paging message to the UE, wherein the paging message carries no indication element;
receiving, by the network node device, the second service request message carrying an service type indication and sent by the UE, wherein the service type indication is used to indicate that the second service request message is a paging response; and
establishing, by the network node device, the NAS connection for the UE, wherein during the procedure of establishing the NAS connection for the UE, the network node device determines not to create the radio access context and/or the security context for the UE according to the service type indication in the second service request message.

18. A user equipment UE, comprising:
a receiving unit, configured to receive downlink data or a downlink message, wherein the downlink data or message is small-packet data;
a selecting unit, configured to select a signaling mode or data mode as a mode of responding to the downlink data or message; and
a responding unit, configured to respond to the downlink data or message by using the selected mode.

19. The UE according to claim 18, wherein the selecting unit is specifically configured to:
according to a response mode indication element carried in NAS signaling or a short message comprising the downlink data or message, select the signaling mode or data mode as the mode of responding to the downlink data or message, wherein the response mode indication element is used to instruct the UE to respond to the downlink data or message by using the signaling mode or data mode; or
select the signaling mode or data mode as the mode of responding to the downlink data or message, according to data amount of response data or a response message generated by the UE; or
select the signaling mode or data mode as the mode of responding to the downlink data or message, according to the number of response times of response data or a response message generated by the UE.

20. The UE according to claim 18 or 19, wherein:
if the mode selected by the selecting unit is the signaling mode, the responding unit is specifically configured to add the generated response data or message to an uplink NAS message or short message and sends the uplink NAS message or short message to a network node device.

21. The UE according to claim 18 or 19, wherein:
if the mode selected by the selecting unit is the data mode, the responding unit is specifically configured to initiate a PDP context activation or PDN connection establishment procedure when the UE has no packet data protocol PDP context or public data network PDN connection.

22. The UE according to claim 18 or 19, wherein:
if the mode selected by the selecting unit is the data mode, the responding unit is specifically configured to initiate a PDP context activation or PDN connection establishment procedure when the UE has no PDP context or connection that can meet a response data transmission requirement.

23. The UE according to claim 18 or 19, wherein:
if the mode selected by the selecting unit is the data mode, the responding unit is specifically configured to, when the UE has a PDP context or PDN connection, initiate a service request procedure to a network node device, and after the network node device creates a radio access context and/or a security context for the UE in the service request procedure, send the response data or message to the network node device over the PDP connection or PDN connection.

24. The UE according to claim 18 or 19, further comprising: a first connecting unit, configured to, when the UE is in idle state, receive a paging message sent by a network node device and send a second service request message to the network node device to establish a NAS connection for the UE.

25. The UE according to claim 24, wherein:
the first connecting unit comprises: a first receiving module, configured to, when the UE is in idle state, receive the paging message sent by the network node device, wherein the paging message carries an indication element and the indication element is used to indicate that the downlink data or message is small-packet data;
a first setting module, configured to set a cause value according to the paging message carrying the indication element, wherein the cause value is used to instruct the UE to initiate an RRC connection establishment procedure to respond to paging of the small-packet data; and
a first sending module, configured to send the cause value and the second service request message to the network node device through a RAN-side device in the RRC connection establishment procedure to establish the NAS connection for the UE.

26. The UE according to claim 24, wherein:
the first connecting unit comprises: a second receiving module, configured to, when the UE is in idle state, receive the paging message sent by the network node device, wherein the paging message carries no indication element; and
a second sending module, configured to send the second service request message to the network node device to establish the NAS connection for the UE, wherein the second service request message carries a service type indication and the service type indication is used to indicate that the second service request message is a paging response.

27. A network node device, comprising:
a sending unit, configured to send downlink data or a downlink message to a UE, wherein the downlink data or message is small-packet data;
a second connecting unit, configured to page the UE when the UE is in idle state, receive a second service request message sent by the UE, and establish a NAS connection for the UE, wherein during the procedure of establishing the NAS connection for the UE, the network node device determines not to create a radio access context and/or a security context for the UE; and
a response receiving unit, configured to receive response data or a response message sent in signaling mode or data mode by the UE .

28. The network node device according to claim 27, wherein the sending unit is specifically configured to send a NAS message or short message comprising the downlink data or message to the UE, wherein the NAS message or short message further carries a response mode indication element used for instructing the UE to respond to the downlink data or message by using the signaling mode or data mode.

29. The network node device according to claim 28, wherein the downlink data or message carries the response mode indication element added by a sender of the downlink data or message; or
the network node device further comprises: an adding unit, configured to obtain, from subscription data of the UE, the service characteristic of the UE being small-packet data, set the response mode indication element according to the service characteristic, and add the response mode indication element to the NAS message or short message.

30. The network node device according to any one of claims 27 to 29, wherein:
the second connecting unit comprises: a third adding module, configured to add the indication element to a paging message, wherein the indication element is used to indicate that the downlink data or message is small-packet data;
a third sending module, configured to send the paging message to the UE so that the UE sets a cause value, wherein the cause value is used to instruct the UE to initiate an RRC connection establishment procedure to respond to paging of the small-packet data;
a third receiving module, configured to receive the cause value and the second service request message forwarded by a RAN-side device; and
a third connection establishing module, configured to establish the NAS connection for the UE, and according to the cause value in the third receiving module, determine not to create the radio access context and/or the security context for the UE.

31. The network node device according to claim 30, wherein the third adding module is specifically configured to:
obtain, from the subscription data of the UE, the service characteristic of the UE being small-packet data, set the indication element according to the service characteristic, and add the indication element to the paging message; or
receive the indication element generated and sent by the sender of the downlink data or message, and add the indication element to the paging message.

32. The network node device according to any one of claims 27 to 29, wherein:
the second connecting unit comprises: a fourth sending module, configured to send a paging message to the UE, wherein the paging message carries no indication element;
a fourth receiving module, configured to receive the second service request message sent by the UE, wherein the second service request message carries a service type indication; and
a fourth connection establishing module, configured to establish the NAS connection for the UE, and determine not to create the radio access context and/or the security context for the UE when the service type indication in the fourth receiving module is used to indicate the second service request message is a paging response.

33. A service response system, comprising a user equipment UE and a network node device; wherein:
the network node device is configured to send downlink data or a downlink message to the UE, wherein the downlink data or message is small-packet data;
the user equipment is configured to receive the downlink data or message sent by the network node device, select a signaling mode or data mode as a mode of responding to the downlink data or message, and respond to the downlink data or message by using the selected mode; and
the network node device is further configured to receive response data or a response message sent in selected mode by the UE.

34. The system according to claim 33, wherein the network node device is further configured to: page the UE when the UE is in idle state; receive a second service request message sent by the UE; and establish a NAS connection for the UE, wherein during the procedure of establishing the NAS connection for the UE, the network node device determines not to create a radio access context and/or a security context for the UE.
